# EUROPÄISCHE PATENTSCHRIFT

(11) **EP 2 272 333 B1**
(45) Veröffentlichungstag und Bekanntmachung des Hinweises auf die Patenterteilung: **22.01.2014**
(21) Anmeldenummer: 10001972.8
(22) Anmeldetag: 26.02.2010
(51) Int. Cl.: A01K 63/04

(54) **Vorrichtung zur Reinigung von künstlichen Gewässern**
Device for cleaning man-made waters
Dispositif de nettoyage d'eaux artificielles

(30) Priorität: 09.06.2009 DE 202009008044 U; 17.02.2010 FR 1051127
(43) Veröffentlichungstag der Anmeldung: 12.01.2011
(73) Patentinhaber: Bräuchle, Tino, 74906 Bad Rappenau (DE)
(72) Erfinder: Bräuchle, Tino, 74906 Bad Rappenau (DE)
(74) Vertreter: Weber & Seidel

(56) Entgegenhaltungen:
- EP-A2- 1 038 435
- DE-A1- 2 700 030
- US-A- 4 169 049
- US-A- 4 379 050
- US-A- 5 326 475

## Beschreibung

Die Erfindung betrifft ein Filtersystem zur Wasseraufbereitung, insbesondere biologischen, mit einem Filterkörper, umfassend eine Filtersubstratschicht, eine Wasserverteilschicht, eine Wassersammelschicht und ein System für die Verteilung des zu reinigenden Wassers im Filterkörper mittels eines geschlossenen Systems von Rohrleitungen und mit einer Druckleitung zum Zuführen des zu reinigenden Wassers, und sie betrifft eine Anordnung solcher Filtersysteme.

Die Erfindung betrifft ferner ein separates Wasserverteilsystem für Filtersysteme.

Bei künstlichen Gewässern, z.B. seeartigen Anlagen oder Schwimm-, Garten-, Fischsowie Krebsteichen, bestehen besonders hohe Anforderungen an die Wasserklarheit von Seiten der Nutzer bzw. Besitzer. Diese Gewässer werden aufgrund ihrer natürlichen Umgebung, oft mit externen Nährstoffeinträgen belastet. Durch die Badetätigkeit der Menschen oder gezielte Zufütterung kommen noch zusätzliche Nährstoffbelastungen hinzu, welche die Wasserklarheit beeinträchtigen können.

Allgemein üblich ist, solche Gewässer durch eine gezielte Förderung von Biofilmen in einem sogenannten Aufbereitungsbereich (Filterzone) zu reinigen. Ein Biofilm enthält Mikro-Organismen, die die im zu reinigenden Wasser enthaltenen Nährstoffe aufnehmen und so dem Wasser entziehen (Reinigungsvorgang).

Ein solcher Aufbereitungsbereich ist oft ein mehrschichtiger Filterkörper mit einer der Reinigung dienenden Filtersubstratschicht, einer dem Filtersubstrat Wasser zuführenden Wasserverteilschicht und einer das gereinigte Wasser aufnehmenden Wassersammelschicht. Die Wassersammelschicht kann gleichzeitig auch als Abdeckschicht mit Wasserpflanzen bestückt sein. Wasserverteilschicht und Wassersammelschicht sind üblicherweise mit entsprechenden Substraten, z.B. Kiesel, gefüllt und belasten oft durch die eigene Nährstoffhaltigkeit das künstliche Gewässer zusätzlich. Der Biofilm findet sich im ganzen Filterkörper, wird aber in der Filtersubstratschicht durch geeignete Substrate besonders konzentriert.

Für den Reinigungsbetrieb wird dem Filterkörper fortlaufend eine vorgegebenes Wasservolumen aus dem zu reinigenden Gewässer zugeführt. Aufgrund der dabei kontinuierlich stattfindenden Nährstoffentnahme durch den Biofilm wird letztlich ein Klarwasserstadium erreicht. Die den Biofilm bildenden Organismen benötigen zum Überleben eine ausreichende Versorgung mit im Wasser gelöstem Sauerstoff und werden daher als (aktive) aerobe Biologie bezeichnet. Diese aktive aerobe Biologie wird gezielt bewirtschaftet, d.h. Sauerstoff- und Nährstoffzufuhr mittels des zu reinigenden Wassers fordern das Wachstum und damit die Filteraktivität, gezieltes Absterbenlassen und Ausspülen des Biofilms bei Erreichen der maximalen Wachstumsdichte dient der Reduzierung der Gesamtbilanz des Nährstoffkreislaufs im Gewässer. Sonst würde beim unkontrollierten Absterben der Mikroorganismen eine Nährstoffrückfuhr erfolgen.

Das für die Reinigung benötigte Wasservolumen wird durch Ansaugen innerhalb des zu reinigenden Gewässers (meist an der Oberfläche des Gewässers) abgezogen. Der Oberflächenabzug dient zum Vorfiltrieren von groben Schwebmaterialien, wie z.B. Laub, Nadeln, Früchte, Geäst oder sonstigem Treibgut.

Das angesaugte Wasser wird üblicherweise über eine druckseitige Verteilung an der Pumpe ganz oder teilweise dem Filterkörper zugeführt ("druckseitig" heißt: vor Erreichen bzw. unterhalb der Filtersubstratschicht). In der Filterzone wird das Wasser durch örtlich begrenzte Verteilerschächte, Verteilerplatten oder sonstige drainagebasierende Rohre bzw. Rohrabschnitte verteilt, die auf der Sohle innerhalb der Filterzone angeordnet und mit der druckseitigen Leitung der Pumpenanlage verbunden sind. Dieses mit Ausström-Endstücken ausgestaltete Wasserverteilungskonstrukt kann das gepumpte Wasser nur ungleichmäßig im Filterkörper verteilen, was zu einer ungleichmäßigen Versorgung des Biofilms mit Sauerstoff und Nährstoffen und damit zu einer ungleichmäßigen Filterleistung führt. Mittransportierte Luft, z.B. durch Undichtigkeiten in der Leitung, falsche Pumpenleistung (Kavitation) oder unsachgemäße Bedienung, wird dabei ebenfalls im Filterkörper verteilt. Die Menge der mittransportierten Luft kann objektbezogen, d.h. je nach individueller, konkreter Ausgestaltung der Vorrichtung, unterschiedlich groß sein. Aufgrund des erhöhten Auftriebs der Luft bilden sich langsam aber kontinuierlich Wasserkanäle mit geringerem Widerstand im Filtersubstrat. Wasserkanäle sind die Auftriebswege der Luftblasen durch das Substrat, durch die das Wasser (aufgrund geringeren Widerstands) nachfließen kann. Solche Wasserkanäle verhindern eine gleichmäßige Verteilung des Wassers im Substrat.

Eine bessere Verteilbarkeit des Wassers kann durch ein geschlossenes System von Rohrleitungen erreicht werden. Ein Beispiel einer Filtervorrichtung mit geschlossenem System zur Wasserverteilung, das druckseitig, d.h. vor Erreichen der Filterschichten angeordnet ist, offenbart die US 4,379,050 für eine Filtervorrichtung zum Einsatz in Fischgewässern. Diese verteilt das Wasser über miteinander verbundene, parallel angeordnete Rohre breitflächig im Filterbereich, wobei das Wasser durch Perforationen in den Rohren austritt und dadurch wesentlich gleichmäßiger auf die Filterschicht bzw. das Filtergranulat mit oder ohne Mikroorganismen (Bakterien) gleichmäßig verteilt wird.

Die EP 1 038 435 A2 offenbart eine andere Variante eines geschlossenes Wasserverteilsystem in Form von beliebig anordenbaren und damit auf der Fläche verteilbaren Verteilerrohren, wobei Durchbrüche in den Rohren dem Wasseraustritt und damit zur gleichmäßigen Wasserverteilung in die aktiven Filterschichten dienen. Auch damit wird eine gleichmäßigere Verteilung des Wasser im Filterbereich mit der aktiven aeroben Biologie erreicht. Keine der beiden Schriften beschäftigt sich jedoch mit dem Problem der mitgeführten Luft, die auch nach einer anfänglich gleichmäßigen Verteilung des Wasser zu einer ungleichen Versorgung des Biofilms führen kann.

Der Nachteil dieser Systeme besteht somit darin, daß das für die Gesamtfläche des Filterkörpers vorgesehene Wasservolumen kürzere Schlupfwege durch das Substrat findet (Hydraulischer Kurzschluß aufgrund von Wasserkanalbildung, wie zuvor erläutert), Dadurch können einzelne Bereiche des Filters von der Versorgung mit dem für die Biofilm-Organismen benötigten Sauerstoff und Nährstoffen abgeschnitten werden, wodurch diese absterben. Hydraulische Kurzschlüsse führen somit in dem als aerob konstruierten Filter zu anaeroben (sauerstoffarmen) und damit unterversorgten Bereichen im Biofilter, durch die die biologische Filtrierleistung des Filters verringert wird. Die Folge ist die Freisetzung von im Biofilm gebundenen Nährstoffen durch Absterben der Mikroorganismen sowie der dauerhafte Verlust der Filterfunktionsfähigkeit (Wasserreinigung) und somit die Beeinträchtigung der Wasserqualität.

Ausgehend von dem zuvor beschriebenen Stand der Technik ist daher die Aufgabe zu lösen, ein Filtersystem der eingangs beschriebenen Art so weiterzubilden, daß die vorbeschriebene Problematik vermieden wird und eine bessere Filtrationsleistung erzielt werden kann.

Dies wird für ein Filtersystem der eingangs genannten Art dadurch erreicht, daß Mittel zum gezielten Abführen der mit dem zu reinigenden Wasser mitgeführten Luft vor Erreichen des Filtersubstrats vorgesehen sind.

Dieses erfindungsgemäße Konstrukt ist ein baulich in sich geschlossen verbundenes Leitungssystem (Wasserverteilsystem), welches sich individuell nach Bauform der Filterzone anpassen läßt. Dabei sorgt ein zur Wasserverteilung vorgesehenes horizontal verlegtes Konstrukt für eine gleichmäßige Wasserverteilung im Filterkörper, insbesondere in der Filtersubstratschicht, ohne störende Luftanteile, die vor Erreichen des Filtersubstrats aus dem Wasser entfernt werden. Dadurch können die zuvor als nachteilig erläuterten Wasserkanäle und damit hydraulische Kurzschlüsse vermieden werden, was eine kontinuierlich gleichmäßige Versorgung des Biofilms und damit auch eine gleichmäßig effiziente Biofilm-Aktivität gewährleistet.

Zweckmäßigerweise wird die im zu reinigenden Wasser mitgeführte Luft möglichst nahe, also unmittelbar vor dem Erreichen des Filtersubstrats, abgeführt. Damit kann eine besonders effiziente Vermeidung des hydraulischen Kurzschlusses erzielt werden. Alternativ ist auch eine Anordnung der Mittel an der Druckleitung möglich, wenn dies beispielsweise aufgrund baulicher Rahmenbedingungen vorteilhaft oder gar erforderlich ist.

Die Mittel zum Abführen der mitgeführten Luft können vorteilhafterweise als Steigleitung ausgebildet sein. Dies erlaubt eine effiziente Abführung der Luft und ermöglicht auf einfache Weise, Steuermittel für die Bedienung vorzusehen.

Zweckmäßigerweise sind Steuermittel für die manuelle oder automatische Bedienung vorgesehen. Dies erlaubt einen gezielten Einsatz bei veränderlichen Bedingungen. Vorteilhafterweise ist die Steuerung als Ventil ausgebildet.

Eine weitere vorteilhafte Konstruktion sieht vor, daß Wasserverteil- und/oder Wassersammelschicht im wesentlichen substratfrei sind, um die Nährstoffbelastungen im Gewässer zu verringern. Dabei kann im substratfreien Bereich ein Verteilerelement vorgesehen sein, das die Verteilung des Wassers wesentlich effizienter und störungsfreier gewährleistet, als dies durch die üblichen Füllsubstrate (Kiesel etc.) erreicht werden kann.

Vorteilhafterweise weist ein solches Verteilerelement ein Hohlraumsystem auf, das für eine gleichmäßige Wasserverteilung des obig beschriebenen Leitungssystems sorgt und als widerstandsfreier gegenüber Substraten zu betrachten ist. Dieses Hohlraumsystem kann beispielsweise mattenartig ausgestaltet sein.

Sinnvollerweise können solche Verteilerelemente in Verbindung mit dem geschlossenen Leitungssystem druck- als auch saugseitig, d.h. in der Wasserverteil- oder der Wassersammelschicht, verwendet und entsprechend eingebaut werden. Dadurch ist sichergestellt, daß sich diese Wasserverteilungs- und Wassersammeleinrichtung effizient für die vorgesehenen Aufgaben der Wasseraufbereitung einsetzen läßt. Somit bietet sie die vorteilhafte Möglichkeit, den vorgesehenen Flächenbedarf in Aufbauhöhe und Aufbaubreite der Filterfläche zu reduzieren.

Vorteilhaft ist es, wenn Sicherungsmanschetten an der Steigleitung und/oder der Druckleitung vorgesehen sind, um diese gegen Rüttelbewegung im Substratbereich zu stabilisieren und damit der Entstehung von Strömungsachsen entlang der Rohre entgegenzuwirken. Für die Druckleitung entfällt das Erfordernis, wenn sie durch den Boden bis zur Filtervorrichtung geführt wird, weil allein dadurch schon Rüttelbewegungen abgepuffert werden, die Druckleitung selbst dann nicht durch das Substrat führt und in dem Fall entlang der Druckleitung keine Strömungsachsen verhindert werden müssen. Rüttelbewegungen werden beispielsweise durch ungleichmäßigen Pumpenbetrieb, der durch Druckschwankungen oder mitgeführte Luft ausgelöst werden kann, verursacht. Solche Rüttelbewegungen im Substratbereich können zu Kanalbildung (substratfreie Bereiche im Bereich der Rohrwandungen) und damit zu Strömungsachsen (hydraulischer Kurzschluß) führen. Strömungsachsen bzw. hydraulische Kurzschlüsse können, wie schon erläutert, die gleichmäßige Verteilung des Wassers im Substrat und damit die Filtrierungsleistung beeinträchtigen. Die Auskragung der Sicherungsmanschetten stabilisiert dabei zum einen durch Eingriff mit dem Substrat gegen Rüttelbewegung, wirkt darüber hinaus aber auch eventuell dennoch auftretenden Strömungsachsen im Substratbereich entlang der Rohre als Strömungswiderstand entgegen.

Die Verwendung von Verteilerelementen läßt einen mehrschichtigen Filtersystemaufbau, auch unter Verwendung herkömmlicher Filterkörper, bei gleicher Bemessung zu. Dieser mehrschichtige Aufbau erlaubt eine Vorkonfektionierung in geschlossenen Moduleinheiten mit eigenständigen Zu- und Abströmeinheiten, in denen sich nur die relevanten Filtersubstrate befinden. Stapelbare vorkonfektionierte Filterkörper können ohne größeren Einsatz von Ressourcen von bautechnischen Geräten transportiert werden. Sie können wahlweise mit Pflanzen bestückt werden oder ohne Pflanzen zum Einsatz kommen.

Aufgabe der Erfindung ist ferner, herkömmliche Filtersysteme erfindungsgemäß aufrüstbar zu machen. Dies wird mit einem geschlossenen Wasserverteilsystem gemäß den Ansprüchen 14 und 15 erreicht. Durch eine Integration erfindungsgemäßer Wasserverteilsysteme in herkömmliche Wasserfilter können vorhandene Filtersysteme effizienter arbeiten. Dies erlaubt eine kostengünstige Optimierung vorhandener Systeme.

Die Erfindung wird nachfolgend anhand eines in der Zeichnung dargestellten Ausführungsbeispiels erläutert. Es zeigen
- **Fig. 1**: ein Filtersystem mit geschlossenem Wasserverteilsystem als Prinzipskizze,
- **Fig. 2**: eine erfindungsgemäße Ausgestaltung des geschlossenen Wasserverteilungssystems,
- **Fig. 3**: ein Detail des geschlossenen Rohrleitungssystems aus Fig. 2,
- **Fig. 4**: einen herkömmlichen Filterkörper mit integriertem erfindungsgemäßem Wasserverteilungssystem als Prinzipskizze,
- **Fig. 5**: eine Kopplung mehrerer erfindungsgemäßer Filterkörper als Prinzipskizze.

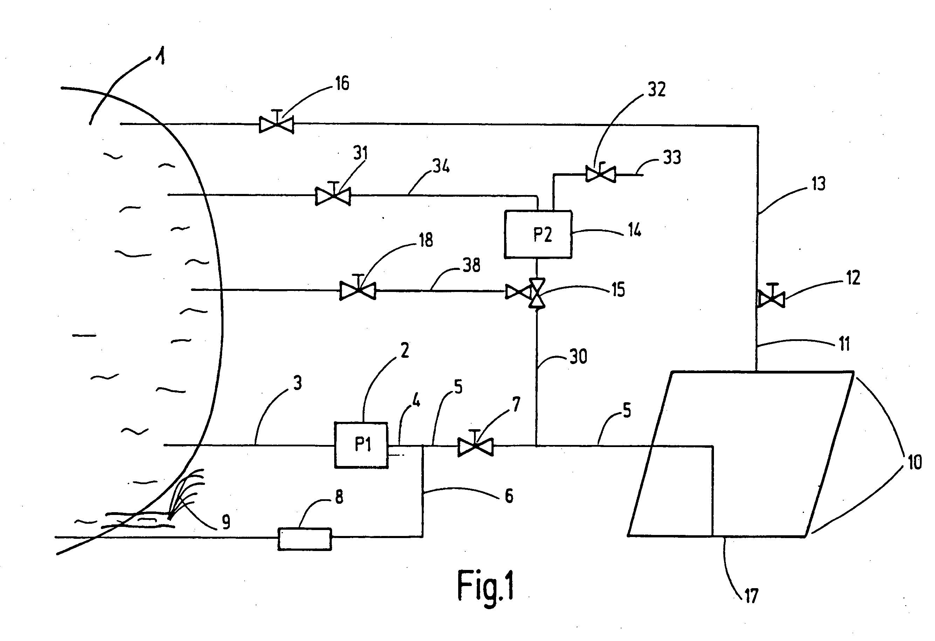

**Fig. 1** zeigt ein zur Reinigung vorgesehenes künstliches Gewässer oder Teichanlage 1, in der das zu reinigende Wasser durch eine mit einer Pumpenanlage (P1) 2 verlegte Saugleitung 3 angesaugt wird. Die an der Pumpenanlage (P1) 2 befindliche Druckleitung 4 wird bei Bedarf in mindestens zwei Leitungen 5, 6 aufgeteilt. Ist dagegen das Wasservolumen für die Filterbeschickung mit den Pumpenleistungsdaten konform, ist eine Druckleitung 5 für die Zufuhr des zu reinigenden Wassers zum Filterkörper 24 (hier nur durch die Filterfläche 10 in Position und Ausrichtung angedeutet) ausreichend.

Wenn die druckseitige Einrichtung aus mindestens zwei Leitungen 5, 6 besteht, wird diese aufgeteilt in eine erste Filterdruckleitung 5, regulierbar mit einem Kugelhahn 7, sowie in die zweite Druckleitung 6, der so genannten Bypassleitung 6. Die Bypassleitung 6 dient der Messung des Volumenstroms der gesamten geförderten Wassermenge. Durch eine Wasserdurchfluß-Meßstation 8 kann das für den Filter berechnete Wasservolumen eingestellt werden. Das überschüssige Wasservolumen wird in die Teichanlage zurückgepumpt, hierbei kann es z.B. auch als Wasserspiel 9 genutzt zurückfließen.

Ist eine weitere Pumpe (P2) 14 in dem Filtersystem vorgesehen, kann diese neben der normalen Ansaugleitung 38 zum zu reinigenden Gewässer über ein Absperrventil 18 zu den genannten Wartungszwecken am Rohrleitungsabschnitt 5 oder an der Rohrleitung 13 angeschlossen werden (hier nicht dargestellt). Eine gezielte Zusteuerung kann über einen Mehrweghahn 15 erfolgen.

Das abzutransportierende, nährstoffhaltige Wasser wird bei einer Leitungsreinigung oder Filterspülung durch Öffnen des Absperrventils 32 direkt in einen Abwasser-, Kanal- oder anderen gleichwertigen Anschluß 33 abgeführt. Ansonsten ist mindestens eine Druckleitung 34 mit Absperrventil 31 zur Wasserumwälzung im Normalbetrieb vorgesehen. Es besteht ebenfalls die Möglichkeit, den Filterbetrieb mit Saugkraft bzw. Saugwirkung anstatt mit Druckkraft vorzusehen.

Der als Luftsammler vorgesehene Rohrleitungsabschnitt 13 ist auch zur Leitungsreinigung, zum Filterspülen oder Bewirtschaftung des Filterkörpers 24 nutzbar und kann bei Bedarf entsprechend aufgerüstet werden. Hier wird der Luftsammler 13 beispielhaft in die Teichanlage 1 zurückgeführt, um das mit der abzuführenden Luft mitgeführte Wasser im Wasserkreislauf zu halten.

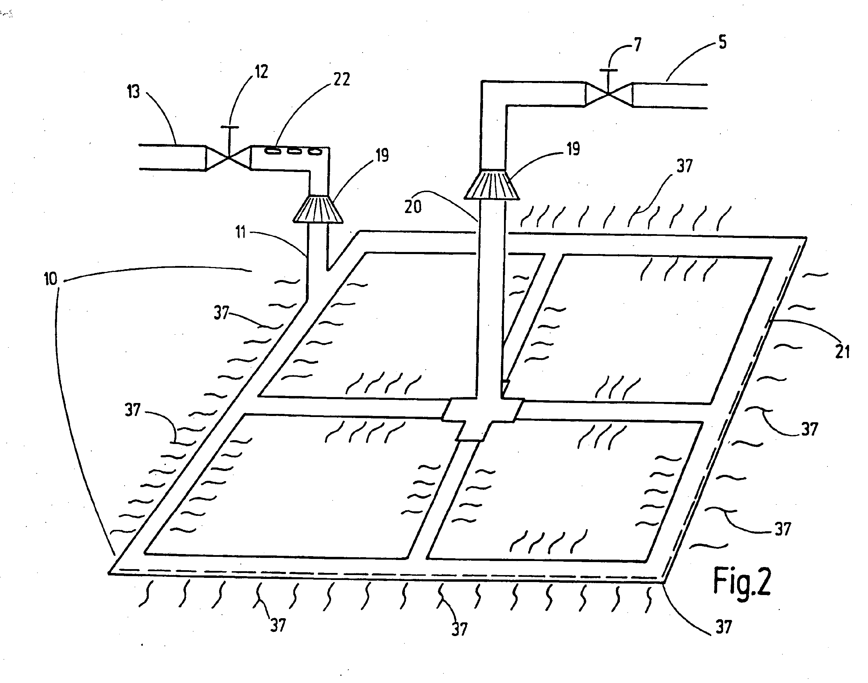

**Fig. 2** zeigt, wie die an der Filterfläche 10 hier beispielhaft horizontal ankommende Filterdruckleitung 5 vertikal auf idealem Weg für die jeweilige baulich vorhandene Situation auf den Filterzonenboden geführt wird. Sicherungsmanschetten 19 dienen dazu, Rüttelbewegungen an Rohrabschnitten im Substrat und damit einer Kanalbildung durch die Substrate entlang dieser Rohrabschnitte entgegenzuwirken. Die Sicherungsmanschetten 19 umgeben hier die Druckleitung 5 im Bereich des Anströmpunkts 20 und den Luftsammler 13 im Bereich der Steigleitung 11 als ringförmige Auskragung. Die Auskragung dient dazu, mit dem Substrat so in Eingriff zu kommen, daß dadurch starke Rüttelbewegungen verhindert oder abgeschwächt werden, wirkt andererseits aber auch als Strömungswiderstand gegen eventuell dennoch auftretende Strömungsachsen entlang der Rohre 5, 13, im Bereich des Filterkörpers 24 (nicht dargestellt). Die Darstellung der Auskragung ist hierbei schematisch zu verstehen, d.h. die konkrete Ausgestaltung ergibt sich aus den jeweiligen konkreten Anforderungen bzw. Möglichkeiten.

Das für die Filterzone vorgesehene Wasservolumen wird über Zuströmpunkte 20 in das Rohrleitungssystem 17 gepumpt. Die Anordnung und Anzahl der Zuströmpunkte 20 richtet sich individuell nach der gebauten Filterflächensituation 10.

Durch die Perforationen 21 in der geschlossenen Rohrleitung 17 tritt das zu reinigende Wasser 37 aus und gelangt so in den eigentlichen Filterkörper 24 (nicht dargestellt).

Der Standort des Luftsammlers 13 ist ebenfalls den baulichen Rahmenbedingungen angepaßt. Die angesammelte Luft 22 wird durch ein Absperrventil 12 individuell auf idealstem Weg entlüftet. Bei einer automatisierten Entlüftung wird der Rohrleitungsabschnitt 13 wieder in den Teich zurückgeführt und ein neuer, d.h. alternativer, Standort des Absperrventils 12 (siehe Fig. 1, Nr. 16) festgelegt.

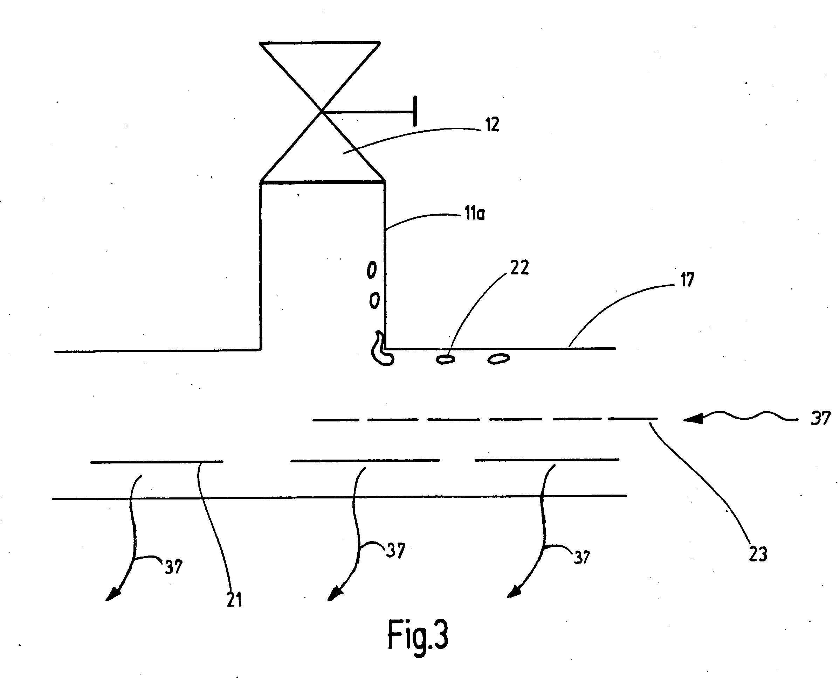

**Fig. 3** zeigt im Detail die Perforationen 21 der geschlossenen Rohrleitung 17 aus Fig. 2, durch die das Wasser in Richtung der Pfeile 37 austritt. Diese Perforationen 21 können als Löcher, Schlitze oder dergleichen ausgestaltet sein, müssen jedoch in ihrer Position unterhalb der horizontalen Mittelachse 23 angeordnet sein. Die mit dem Wasser mitgeführte Luft 22 wird entlang des Obergewölbes des vertikal verlegten Rohrleitungsnetzes 17 transportiert. Diese in dem Rohrleitungssystem 17 transportierte Luft 22 sammelt sich an einer ausgebildeten Steigleitung 11 a und kann über ein Absperrventil 12 aus dem System manuell oder automatisiert entfernt werden.

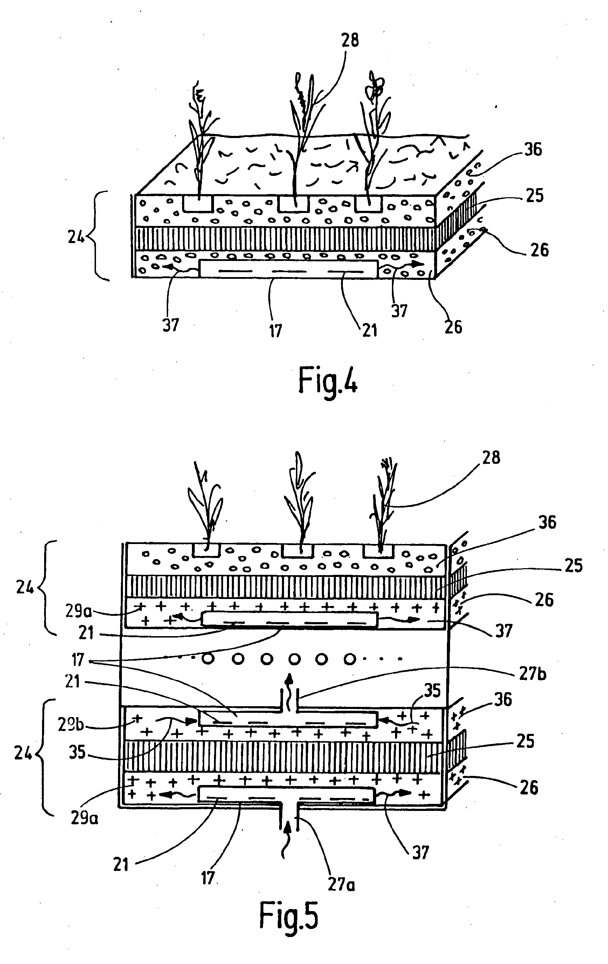

**Fig. 4** zeigt einen als Kubus ausgeformten herkömmlichen Filterkörper 24, der als oberste Schicht das Abdeck- bzw. Sammelsubstrat 36 aufweist, in dem sich Wasserpflanzen 28 befinden können. Die unterste Schicht wird durch die Wasserverteilschicht 26 mit entsprechendem Substrat ausgebildet, das der Wasserverteilung dient. Zwischen diesen beiden Schichten liegt das eigentliche Filtersubstrat 25.

Das auf dem Boden des Filterkörpers 24 verlegte erfindungsgemäße Rohrleitungssystem 17 ist im Substrat der Wasserverteilschicht 26 eingebettet. Über die Perforationen 21 des Rohrleitungssystems 17 strömt das zuvor von mitgeführter Luft befreite Wasser 37 in die Wasserverteilerschicht 26 und von dort zur Filtersubstratschicht 25. Nach der Reinigung des Wassers in der Filtersubstratschicht 25 wird das austretende, gereinigte Wasser in der Wassersammelschicht 36 gesammelt und von dort in die Umgebung, d.h. in das zu reinigende Gewässer, abgegeben. Das waagrecht verlegte Rohrleitungssystem 17 ist individuell den baulichen Anforderungen ausgebildet und dient der gleichmäßigen Wasserverteilung des zu reinigenden Wassers. Mindestens eine im gesamten Rohrleitungsnetz (d.h. einschließlich der zuführenden Druckleitung) vertikal angeordnete Steigleitung 11a (hier nicht dargestellt) dient als Luftsammler für die mittransportierte Luft 22 (hier nicht dargestellt) vor Erreichen der Filtersubstratschicht 25.

Auf diese Weise können herkömmliche Wasserfiltersysteme auf einfache Weise erfindungsgemäß weitergebildet werden.

**Fig. 5** zeigt als weitere Ausgestaltungsmöglichkeit der Erfindung eine Kopplung mehrer erfindungsgemäßer Filterkörper 24 gem. Fig. 4, wobei nur der oberste und der unterste Körper 24 dargestellt ist. Die Anordnung beliebig weiterer Filterkörper 24 zwischen diesen beiden sind durch die Punktierung angedeutet.

Bei diesem Ausführungsbeispiel sind alle Wasserverteilschichten 26 und Wassersammelschichten 36 mit einem erfindungsgemäßen Verteilerelement 29a bzw. 29b in Form eines Hohlraumsystems ausgestattet, mit Ausnahme der obersten Wassersammelschicht 36. Diese oberste Wassersammelschicht 36 ist nur mit Substrat ausgestattet und dient als Abdeckschicht der Aufnahme von Wasserpflanzen 28. Die Verteilerelemente 29b in den übrigen Wassersammelschichten 36 dienen dazu, das jeweils gereinigte Wasser 35 der Versorgungsableitung 27b zuzuführen.

Diese Ausstattung der Schichten ist beispielhaft, es sind beliebige andere Kombinationen mit oder ohne Substrat bzw. mit oder ohne hohlräumige Verteilerelemente 29a, 29b, mit oder ohne Wasserpflanzen 28, möglich.

Durch die beispielhaft aufgezeigte Anordnung der Versorgungszuleitungen 27a für das zu reinigende Wassers 37 und die Versorgungsableitungen 27b für das gesammelte gereinigte Wasserfiltrat 35 läßt sich eine geschlossene und somit stapelbare Filterzone mit beliebig vielen Elementen konstruieren. Dies ist mit den Punkten zwischen oberer und unterer Ebene angedeutet. Die gezielte Luftableitung ist, wie in Fig. 2 beschrieben (hier nicht dargestellt), ebenfalls vorgesehen.

Somit besteht die konstruktive Möglichkeit, geschlossene Filtereinheiten zu stapeln, wobei die oberste Filtereinheit mit Wasserpflanzen ausgestattet werden kann. Der daher mit und ohne Pflanzen konstruierbare Filterkörper ist in der Summe kompakter und gewichtsreduzierter herstellbar.

Durch die große Gewichtsreduzierung ist eine transportable Vorfertigung des stapelbaren Filters realisierbar und somit eine zeitlich effiziente Errichtung gegenüber dem aktuellen Stand möglich.

Die in den Figuren dargestellten Ausgestaltungen stellen nur beispielhafte Ausführungsformen des Erfindungsgedankens dar. Wesentlich ist eine gleichmäßige Verteilung des zu reinigenden Wassers innerhalb der Filterschichten, insbesondere der Filtersubstratschicht, und die Vermeidung von hydraulischen Kurzschlüssen im Biofilter durch das gezielte Abführen der im zu reinigenden Wasser mitgeführten Luft vor Erreichen der bioaktiven Substratschicht. Diese Abführung kann selbstverständlich auch schon vor Erreichen des eigentlichen Filterkörpers geschehen.

### Bezugszeichenliste

- 1: Gewässer/Teichanlage, wie Schwimmteich, Fischteich, Krebsteich
- 2: Pumpenanlage P1
- 3: Saugleitung P1
- 4: Druckleitung P1
- 5: Filterdruckleitung
- 6: zweite Druckleitung (Bypassleitung)
- 7: Kugelhahn
- 8: Wasserdurchfluß-Meßstation
- 9: Wasserspiel
- 10: Filterfläche
- 11: Mittel zur gezielten Luftabführung
- 11 a: Steigleitung
- 12: Absperrventil
- 13: Rohrleitungsabschnitt, Luftsammler
- 14: Pumpenanlage P2
- 15: Mehrweg-Absperrventil
- 16: Absperrventil
- 17: geschlossenes Rohrleitungssystem
- 18: Absperrventil
- 19: Sicherungsmanschetten
- 20: Zuströmpunkt
- 21: Perforation
- 22: Luft
- 23: horizontale Mittelachse
- 24: Filterkörper
- 25: Filterschicht (Filtersubstrat)
- 26: Wasserverteilschicht (Wasserverteilsubstrat)
- 27a: Versorgungszuleitung
- 27b: Versorgungsableitung
- 28: Wasserpflanzen
- 29a: Verteilerelement (in Wasserverteilschicht)
- 29b: Verteilerelement (in Wassersammelschicht)
- 30: Rohrleitung
- 31: Absperrventil
- 32: Absperrventil
- 33: Abführanschluß, z.B. Abwasserkanal
- 34: Druckleitung
- 35: gewellter Pfeil: Strömung Wasserfiltrat (gereinigtes Wasser)
- 36: Wassersammelschicht (Abdeckbereich/Wassersammelsubstrat)
- 37: gewellte Linie/Pfeil: Strömung des zu reinigenden Wassers
- 38: Saugleitung

## Patentansprüche

1. Filtersystem zur Wasseraufbereitung, insbesondere biologischen, mit einem Filterkörper (24), umfassend eine Filtersubstratschicht (25), eine Wasserverteilschicht (26), eine Wassersammelschicht (36) und ein System für die Verteilung des zu reinigenden Wassers im Filterkörper (24) mittels eines geschlossenen Systems von Rohrleitungen (17) und mit einer Druckleitung (4, 5) zum Zuführen des zu reinigenden Wassers,
**dadurch gekennzeichnet,**
**daß** Mittel (11) zum gezielten Abführen der mit dem zu reinigenden Wasser mitgeführten Luft (22) vor Erreichen des Filtersubstrats (25) vorgesehen sind.

2. Filtersystem nach Anspruch 1,
**dadurch gekennzeichnet,**
**daß** die Mittel (11) so angeordnet sind, daß sie die Luft unmittelbar vor Erreichen des Filtersubstrats (25) abführen.

3. Filtersystem nach Anspruch 1,
**dadurch gekennzeichnet,**
**daß** die Mittel (11) an der Druckleitung (4, 5) angeordnet sind.

4. Filtersystem nach einem der Ansprüche 1 bis 3,
**dadurch gekennzeichnet,**
**daß** die Mittel (11) als Steigleitung (11a) ausgebildet sind.

5. Filtersystem nach einem der Ansprüche 1 bis 4,
**dadurch gekennzeichnet,**
**daß** die Mittel (11) steuerbar sind.

6. Filtersystem nach Anspruch 5,
**dadurch gekennzeichnet,**
**daß** die Steuerung der Mittel (11) als Ventil (12, 16) in der Steigleitung (11a) ausgebildet ist.

7. Filtersystem nach einem der Ansprüche 1 bis 6,
**dadurch gekennzeichnet,**
**daß** die Wasserverteilschicht (26) und/oder die Wassersammelschicht (36) im wesentlichen substratfrei sind.

8. Filtersystem nach Anspruch 7,
**dadurch gekennzeichnet,**
**daß** die im wesentliche substratfreie Wasserverteilschicht (26) und/oder Wassersammelschicht (36) ein Verteilerelement (29a, 29b) aufweist.

9. Filtersystem nach Anspruch 8,
**dadurch gekennzeichnet,**
**daß** das Verteilerelement (29a, 29b) in Form eines nährstoffarmen Hohlraumsystems ausgebildet ist.

10. Filtersystem nach einem der Ansprüche 1 bis 9,
**dadurch gekennzeichnet,**
**daß** Sicherungsmanschetten (19) an der Steigleitung (11, 11a) und/oder Druckleitung (5) vorgesehen sind, um diese gegen Rüttelbewegung im Substratbereich zu sichern und Strömungsachsen entlang der Rohrleitungen (5, 11, 11a) entgegenzuwirken.

11. Filtersystem nach Anspruch 10,
**dadurch gekennzeichnet,**
**daß** die Sicherungsmanschetten (19) als Auskragungen ausgebildet sind, die die zu sichernde Rohrleitung im wesentlichen umschließen.

12. Anordnung einer Mehrzahl von Filtersystemen nach einem der vorhergehenden Ansprüche,
wobei mindestens zwei Filtersysteme nach einem oder verschiedenen der vorhergehenden Ansprüche miteinander gekoppelt sind.

13. Anordnung nach Anspruch 12,
wobei die Filtersysteme übereinander gestapelt angeordnet sind.

14. Geschlossenes Wasserverteilsystem (17) für ein Filtersystem zur Wasseraufbereitung von Gewässern,
**dadurch gekennzeichnet,**
**daß** Mittel (11) zum gezielten Abführen der mit dem zu reinigenden Wasser (37) mitgeführten Luft (22) vor Erreichen des Filtersubstrats (25) vorgesehen sind.

15. Wasserverteilsystem nach Anspruch 14,
**dadurch gekennzeichnet,**
**daß** die Mittel (11) nach einem der Ansprüche 2, 4, 5 oder 6 ausgestaltet sind.

## Claims

1. A filtering system for the treatment of water, more particularly by biological means, incorporating a filter body (24) comprising a filter substrate layer (25), a water-distributing layer (26), a water-collecting layer (36) and a system for distributing the water to be purified within the filter body (24) by means of a closed piping system (17) and further comprising a pressure line (4, 5) for feeding in the water to be purified,
**characterized in that**
that means (11) are provided for deliberate removal of the air (22) entrained by the water to be purified before the latter reaches said filter substrate (25).

2. A filtering system as defined in claim 1,
**characterized in that**
said means (11) are disposed such that they remove the air just before the water to be purified reaches said filter substrate (25).

3. A filtering system as defined in claim 1,
**characterized in that**
said means (11) are disposed in said pressure line (4, 5).

4. A filtering system as defined in any one of claims 1 to 3,
**characterized in that**
said means (11) are in the form of a riser line (11a).

5. A filtering system as defined in any one of claims 1 to 4,
**characterized in that**
said means (11) are controllable.

6. A filtering system as defined in claim 5,
**characterized in that**
the control means for said means (11) are in the form of a valve (12, 16) in the riser line (11a).

7. A filtering system as defined in any one of claims 1 to 6,
**characterized in that**
the water distributing layer (26) and/or the water-collecting layer (36) are substantially free from substrate.

8. A filtering system as defined in claim 7,
**characterized in that**
the water-distributing layer (26) and/or water-collecting layer (36) that are substantially free from substrate have a distributor element (29a, 29b).

9. The filtering system as defined in claim 8,
**characterized in that**
the distributor element (29a, 29b) is in the form of a system of cavities which is poor in nutrients.

10. A filtering system as defined in any one of claims 1 to 9,
**characterized in that**
protective sleeves (19) are provided on the riser line (11, 11a) and/or pressure line (5), in order to protect the same against vibratory movement in the substrate region and to counteract the occurrence of flow axes along the pipes (5, 11, 11 a).

11. A filtering system as defined in claim 10,
**characterized in that**
the protective sleeves (19) are in the form of overhangs that substantially surround the pipe to be protected.

12. A system comprising a plurality of filtering systems as defined in any one of the previous claims,
in which at least two filtering systems as defined in any one of the previous claims are coupled together.

13. The system as defined in claim 12,
in which the filtering systems are stacked one above the other.

14. A closed water-distributing system (17) for a filtering system for the water treatment of bodies of water,
**characterized in that**
means (11) are provided for deliberate removal of the air (22) entrained with the water (37) to be purified before the latter reaches said filter substrate (25).

15. The water distributing system as defined in claim 14,
**characterized in that**
said means (11) are designed as defined in any one of claims 2, 4, 5, or 6.

## Revendications

1. Système de filtration pour le traitement d'eau, notamment biologique, avec un corps de filtration (24) comprenant une couche (25) de substrat filtrant, une couche (26) de répartition d'eau, une couche (36) de collecte d'eau et un système pour répartir dans le corps de filtration (24) l'eau à épurer au moyen d'un système fermé de conduites (17), et avec une conduite de refoulement (4, 5) pour apporter l'eau à épurer, **caractérisé en ce qu'**il est prévu des moyens (11) pour l'évacuation dirigée, avant l'atteinte du substrat filtrant (25), de l'air (22) entraîné avec l'eau à épurer.

2. Système de filtration selon la revendication 1, **caractérisé en ce que** les moyens (11) sont disposés de telle sorte qu'ils évacuent l'air juste avant l'atteinte du substrat filtrant (25).

3. Système de filtration selon la revendication 1, **caractérisé en ce que** les moyens (11) sont disposés sur la conduite de refoulement (4, 5).

4. Système de filtration selon l'une des revendications 1 à 3, **caractérisé en ce que** les moyens (11) sont réalisés sous la forme d'une conduite montante (11a).

5. Système de filtration selon l'une des revendications 1 à 4, **caractérisé en ce que** les moyens (11) peuvent être commandés.

6. Système de filtration selon la revendication 5, **caractérisé en ce que** la commande des moyens (11) est réalisée sous forme de vanne (12, 16) dans la conduite montante (11a).

7. Système de filtration selon l'une dés revendications 1 à 6, **caractérisé en ce que** la couche (26) de répartition d'eau et/ou la couche (36) de collecte d'eau sont essentiellement dépourvues de substrat.

8. Système de filtration selon la revendication 7, **caractérisé en ce que** la couche (26) de répartition d'eau et/ou la couche (36) de collecte d'eau essentiellement dépourvues de substrat présentent un élément de répartition (29a, 29b).

9. Système de filtration selon la revendication 8, **caractérisé en ce que** l'élément de répartition (29a, 29b) est réalisé sous la forme d'un système de cavités pauvre en nutriments.

10. Système de filtration selon l'une des revendications 1 à 9, **caractérisé en ce que** des manchons d'assujettissement (19) sont prévus sur la conduite montante (11, 11a) et/ou sur la conduite de refoulement (5), afin de protéger ces conduites des secousses dans la région du substrat et de s'opposer aux axes d'écoulement le long des conduites (5, 11, 11a).

11. Système de filtration selon la revendication 10, **caractérisé en ce que** les manchons d'assujettissement (19) sont réalisés sous la forme de saillies qui entourent pour l'essentiel la conduite à assujettir.

12. Agencement d'une pluralité de systèmes de filtration selon l'une des revendications précédentes,
**caractérisé en ce qu'**au moins deux systèmes de filtration selon une ou plusieurs des revendications précédentes sont couplés entre eux.

13. Agencement selon la revendication 12, **caractérisé en ce que** les systèmes de filtration sont disposés empilés les uns sur les autres.

14. Système fermé (17) de répartition d'eau pour un système de filtration pour le traitement d'eaux,
**caractérisé en ce qu'**il est prévu des moyens (11) pour l'évacuation dirigée, avant l'atteinte du substrat filtrant (25), de l'air (22) entraîné avec l'eau (37) à épurer.

15. Système de répartition d'eau selon la revendication 14, **caractérisé en ce que** les moyens (11) sont configurés selon l'une des revendications 2, 4, 5 ou 6.
